Europäisches Patentamt

European Patent Office

Office européen des brevets

(11) Publication number: **0 538 887 A1**

## EUROPEAN PATENT APPLICATION

(21) Application number: **92118203.6**

(22) Date of filing: **23.10.92**

(51) Int. Cl.⁵: **G11B 5/72**

(30) Priority: **25.10.91 JP 279853/91**

(43) Date of publication of application:
**28.04.93 Bulletin 93/17**

(84) Designated Contracting States:
**DE FR GB IT NL**

(71) Applicant: **CANON KABUSHIKI KAISHA**
**30-2, 3-chome, Shimomaruko, Ohta-ku**
**Tokyo(JP)**

(72) Inventor: **Hashimoto, Morimi, c/o Canon**
**Kabushiki Kaisha**
**30-2, 3-chome, Shimomaruko, Ohta-ku**
**Tokyo 146(JP)**
Inventor: **Suzuki, Takashi, c/o Canon**
**Kabushiki Kaisha**
**30-2, 3-chome, Shimomaruko, Ohta-ku**
**Tokyo 146(JP)**

(74) Representative: **Tiedtke, Harro, Dipl.-Ing.**
**Patentanwälte Tiedtke-Bühling- Kinne &**
**Partner Bavariaring 4 Postfach 20 24 03**
**W-8000 München 2 (DE)**

(54) **Magnetic recording medium and method for examining magnetic recording medium.**

(57) A magnetic recording medium is disclosed which comprises a substrate, and a magnetic recording layer and a protective layer containing silicon oxide as the main component, which are formed on at least one surface of the substrate in the order as mentioned, a sheet resistivity of the protective layer being $1 \times 10^{13}$ Ω/□. The magnetic recording medium is excellent in wear resistance, environmental durability and long-term storage durability.

## FIG. 1

## BACKGROUND OF THE INVENTION

Field of the Invention

The present invention relates to a magnetic recording medium, and more particularly to a ferromagnetic metal thin-film type magnetic recording medium having properties such as wear resistance, run stability, durability and environmental resistance that are required in its practical use. The present invention also relates to a method for examining the magnetic recording medium.

Related Background Art

In recent years, there are increasing demands for magnetic recording mediums feasible for high-density recording as the information capacity has become greater in the field of information processing techniques and the quality of pictures or images has become higher in the field of picture or image processing techniques. Accordingly, researches and development for meeting such demands are energetically made.

In particular, metal thin-film type magnetic recording mediums having as a magnetic recording, layer a Co-Ni or Co-Cr ferromagnetic metal thin-film formed by sputtering or vacuum deposition show great promise as mediums suited for high-density recording compared with coated magnetic recording mediums commonly used at present.

In the metal thin-film type magnetic recording mediums, differently from coated mediums, the whole thin-film participates in magnetic recording and spacing loss can be made very small because of its high flatness. Utilization of advantages of such metal thin-film type magnetic recording mediums would bring about magnetic recording mediums much surpassing coated magnetic recording mediums in both output and C/N ratio.

As recording systems, employment of a narrow-track system and a short wavelength system enables high-density recording at least several times as densely as coated magnetic recording mediums.

However, under existing circumstances, various problems remain in putting the metal thin-film type magnetic recording mediums into practical use. For example, in the case of flexible mediums such as video tapes, video floppy disks, data recording tapes and floppy disks, the magnetic recording medium runs while coming into partial contact with a magnetic head to perform recording and reproducing. Accordingly, in order to achieve the high-density recording, the probability of contact between the head and the medium tends to increase since the spacing loss must be made much smaller. In the case of rigid magnetic recording mediums comprising a substrate made of glass or non-magnetic metal, it is common for the medium to be in contact with the magnetic head when the medium is standing. In future, the head will be made to run at a float of about 0.05 $\mu$m or less to achieve a higher recording density, probably resulting in an increase in contact frequency of the recording head with the medium.

However, the magnetic recording layer formed of a metal thin film tends to be damaged upon contact with the magnetic head. When damaged, it may cause a poor runnability or bring about a lowering of output, resulting in stop of tape running in an extreme case. This has been the greatest problem that has hindered metal thin-film type magnetic recording mediums from being put into practical use.

Another problem in putting metal thin-film type magnetic recording mediums into practical use is that some types of metals used cause corrosion of the magnetic recording layer formed of a metal thin film when it is in contact with air over a long period of time. For example, a Co-O thin film may be corroded in a short time in an environment of high temperature and high humidity or an environment containing salt in the air.

Coated magnetic recording mediums hitherto commonly used in video tapes, video floppy disks, data recording floppy disks and so forth are comprised of a base film coated with a mixture of a magnetic powder with a binder, and originally have a finely roughed surface. Hence, they have a small frictional resistance. The problem concerning the sliding on the magnetic head has been solved by adding to the binder a material having an excellent wear resistance or lubricity. Thus, their overall reliability has been improved.

On the other hand, in the metal thin-film type magnetic recording mediums, it has been attempted to form a protective layer on the surface of a metal magnetic layer by the following methods so that the protective layer imparts to the magnetic recording medium (1) wear resistance, (2) lubricity and (3) environmental resistance.

(1) Imparting wear resistance:

An inorganic protective layer comprised of a hard material is formed on a metal thin-film magnetic recording layer. For example, a thin film of SiO, $SiO_2$, SiN, $Al_2O_3$, $TiO_2$ or diamondlike carbon is formed by vacuum deposition, sputtering or plasma CVD.

(2) Imparting lubricity:

i) A protective layer comprised of a lubricating material is formed on a metal thin-film magnetic recording layer or on the aforesaid inorganic protective layer. For example, a thin film of an inorganic material such as $MoS_2$, $WS_2$, diamondlike carbon or amorphous carbon is formed by vacuum deposition, sputtering or plasma CVD. Alternatively, a layer of an organic material such as a fluorine resin, a silicone oil, a surface active agent, a saturated fatty acid or an ester type oligomer is formed by solution coating such as spin coating or dipping, vacuum deposition, or sputtering.

ii) Fine irregularities are formed on the surface of a magnetic recording medium to decrease true contact points to lower coefficient of friction.

(3) Imparting environmental resistance:

i) A corrosion-resistant protective layer is formed. For example, a layer of elemental single material such as Al, Cr, Ti, V or Si, a layer of an oxide, nitride, carbide or boride of such an element, a composite layer of these layers, or a layer of polymeric material such as polyethylene, polyimide or nylon is formed by vacuum deposition, sputtering, plasma CVD or solution coating.

ii) A water-repellent lubricating layer is formed. For example, a silane coupling agent or an oil is coated by solution coating such as spin coating, bar coating or dipping.

Now, checking the standards of durability of floppy disks required to have a high reliability, data-recording floppy disks are required to have a continuous run durability of 3,000,000 passes or more at normal temperature and 1,000,000 passes or more at high temperature (about 50°C) and low temperature (about 10°C), and video floppy disks, 48 hours (about 10,000,000 passes) in every environment of normal temperature, high temperature and humidity (40°C, 80%RH) and low temperature (-5°C).

However, in general, conventional metal thin-film type magnetic recording mediums cause scratches or deposits on the recording medium surface or the head surface after they are made to run several ten thousand to several hundred thousand passes at best, resulting in a great lowering of reproduction output. Thus they can not be said at all to have reached the level of practical use. Conventional rigid metal thin-film type magnetic recording mediums also cause scratches or deposits (masses of fine powder) on the recording medium surface or the head surface after CSS (contact-start-stop) of several to several thousand times, resulting in a great lowering of reproduction output.

This causes a damage of the protective layer itself as a result of its sliding on the magnetic head because of an insufficient hardness of the conventional protective layer, and this damage extends to the magnetic recording layer, where fine powder produced here adheres to the magnetic head to cause the head to clog, resulting in an extreme lowering of reproduction output. In an extreme case, this may cause a damage such as scratches on the medium or the head surface to damage the durability of the medium and head.

A proposal on a magnetic recording medium making use of a silicon compound in the protective layer is made (e.g., Japanese Patent Application Laid-open No. 61-115229, No. 61-178730 or No. 62-229526), which, however, is still unsatisfactory.

With regard to the data-recording floppy disks, an example is seen in which a still durability of 10,000,000 passes or more has been exhibited when a $Co_3O_4$ film, also serving as a solid lubricating film, is used as a protective layer of a Co-Cr magnetic layer (Samoto et al., SHINGAKU GIHO 87-15, 1987). According to an experiment made by the present inventors, however, a thin-film layer comprised of $Co_3O_4$ can give no satisfactory long-term storage durability and environmental resistance. Under existing circumstances, the conventional metal thin-film type magnetic recording mediums, which cause corrosion in the metal thin-film magnetic recording layer in about 0.1 to 10 hours at best in an environmental test (conditions; 85°C, 85%RH; target spec.: 500 hours or more.), have not reached the level of practical use.

## SUMMARY OF THE INVENTION

The present invention solves the problems discussed above, and provides a magnetic recording medium excellent in overall reliability such as wear resistance, environmental resistance and long-term storage durability.

The magnetic recording medium of the present invention comprises: a substrate; and a magnetic recording layer and a protective layer containing silicon oxide as the main component, which are formed on at least one surface of the substrate in the order as mentioned, a sheet resistivity of the protective layer being $1 \times 10^{13}$ $\Omega$/Sq (or $\Omega$/□) or more.

The present invention also provides a method for examining a magnetic recording medium comprising a substrate and a magnetic recording layer and a protective layer containing a silicon oxide as the main component, which are formed on at least one surface of the substrate in the order as mentioned, the method comprising the steps of;

forming a thin film containing silicon oxide as the main component, on a silicon wafer under the same conditions as the conditions for forming the protective layer; and

examining whether or not the thin film has a sheet resistivity of $1 \times 10^{13}$ $\Omega$/Sq or more.

## BRIEF DESCRIPTION OF THE DRAWINGS

Fig. 1 is a partial view to illustrate an example of the magnetic recording medium of the present invention.

Fig. 2 is a partial illustration of another example of the magnetic recording medium of the present invention.

Fig. 3 is a partial illustration of still another example of the magnetic recording medium of the present invention.

Fig. 4 is a partial illustration of a further example of the magnetic recording medium of the present invention.

Fig. 5 is a partial illustration of a still further example of the magnetic recording medium of the present invention.

Fig. 6 is a partial illustration of a still further example of the magnetic recording medium of the present invention.

Fig. 7 is a partial illustration of a still further example of the magnetic recording medium of the present invention.

Fig. 8 is a schematic illustration of an RF magnetron sputtering apparatus.

Fig. 9 is a plan view of the shape of Al electrodes used in measurement of sheet resistivity of the protective layer.

Fig. 10 a schematic illustration of an EB vapor deposition apparatus.

Fig. 11 is a graph to show the relationship between the sheet resistivity of silicon oxide protective layers and the frequency of CSS until scratches appear on magnetic recording mediums.

Fig. 12 shows an example of data of i-V characteristics of a silicon oxide thin film.

## DESCRIPTION OF THE PREFERRED EMBODIMENTS

The magnetic recording medium of the present invention has a magnetic recording layer comprised of a ferromagnetic metal thin film and a silicon oxide protective layer provided thereon.

Film properties of protective layers are commonly known to greatly depend on film formation conditions therefor and vary according to layer thickness.

The present inventors made extensive studies on film properties of thin (a few hundred Å) films formed of silicon oxide fundamentally having long-term storage durability and environmental resistance and on durability of recording mediums. As a result, they found that it is very important for the silicon oxide thin film to be made into a dense film.

They have prepared a medium having a protective layer formed of a thin film containing silicon oxide as the main component and having a sheet resistivity of $1 \times 10^{13}$ $\Omega$/Sq (ohm per square) or more, and have newly discovered that such a medium can achieve a run durability (pass durability) of 10,000,000 passes or more and a CSS test of 20,000 times or more and can have superior long-term storage durability and environmental resistance. They have thus accomplished the present invention.

The present inventors have proposed a magnetic recording medium having a silicon oxide protective layer with a specific resistivity of $3.3 \times 10^{13}$ to $5.0 \times 10^{15}$ $\Omega \cdot$cm (U.S. Patent Application Serial No.

4

478,837). This magnetic recording medium has an excellent durability in an environment around normal temperature. The magnetic recording medium of the present invention has a more improved durability at normal temperature and also a superior durability in an environment of high temperature and humidity and an environment of low temperature.

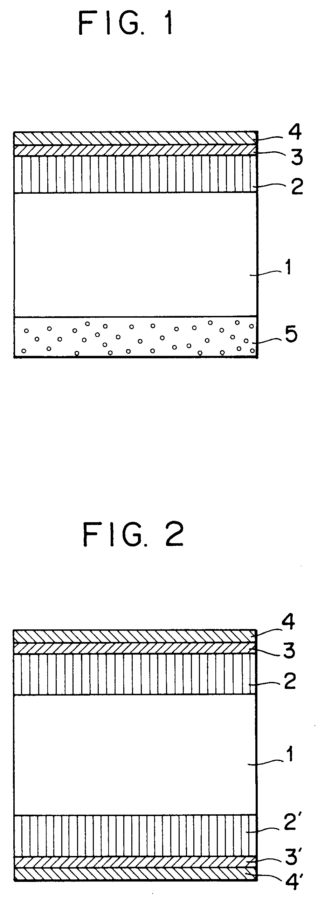

Fig. 1 illustrates a basic structure of the magnetic recording medium according to the present invention. On at least one surface of a substrate 1, a ferromagnetic metal thin film 2 is formed as a magnetic recording layer, and a thin film 3 containing silicon oxide as main component is formed thereon as a protective layer.

The substrate 1 may be made of any materials hitherto commonly used, such as a non-magnetic metal such as an aluminum alloy, or glass, and a polymeric film formed of PET, polyimide, polysulfone, polyamidoimide, polyether ether ketone or aramid.

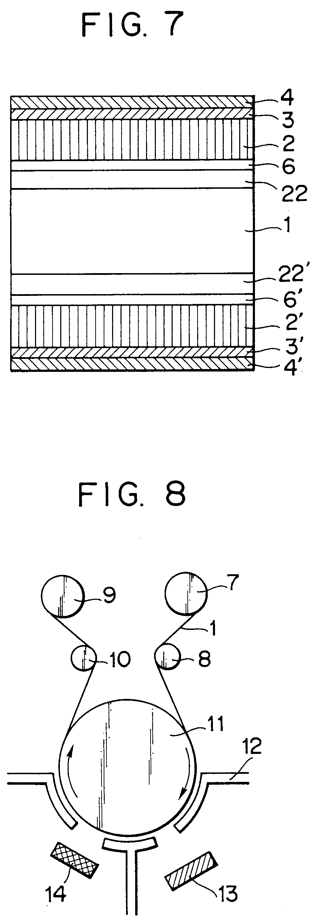

On the surfaces of the substrate 1, surface treatment layers 22 and 22' may be optionally formed as shown in Fig. 7. For example, as surface treatment layers on an aluminum alloy substrate, Ni-P alloy or anodized aluminum (Alumite) layers may be formed or the surfaces of a PET or polyimide film may be coated with a resin containing a filler.

For the purpose of improving lubricity or run stability, the top surface or back surface of the substrate may optionally be provided with a number of fine protuberances (surface irregularities).

In the case when the magnetic layer and protective layer are formed by thin-film deposition on the substrate 1 having such surface irregularities, irregularities substantially corresponding to the fine irregularities on the surface of the substrate 1 are formed on the outermost surface. In other words, the surface roughness of the substrate 1 substantially coincide with the surface roughness of the magnetic recording medium formed.

Taking account of spacing loss or dropouts, the surface roughness of the magnetic recording medium within the region in which recording and reproducing is performed may preferably be not higher than 600 Å, and more preferably not higher than 300 Å, as a height of protuberances in the ranking corresponding to the number at 0.01% of the total number of protuberances when a statistic distribution of the height of protuberances is taken up within the region of 10,000 $\mu m^2$ and the height of the protuberances in this statistic distribution is examined in order of height, and be in a protuberance density ranging from $1 \times 10^4$ to $1 \times 10^{12}$ protuberances/mm², more preferably from $1 \times 10^5$ to $1 \times 10^{10}$ protuberances/mm², and still more preferably from $1 \times 10^6$ to $1 \times 10^{10}$ protuberances/mm². In principle, the higher the protuberance density is, the more the durability increases. It, however, is limited on account of the production of base films.

Here, the surface roughness and protuberance density of the substrate or magnetic recording medium are measured by the shadowing method, which is a non-contact measuring method, as disclosed in Japanese Patent Application Laid-open No. 63-188818.

In the case of the rigid substrate, the surface irregularities can be formed by a method in which the substrate 1 is polished with a texture tape, a method in which the substrate 1 is chemically etched, or a method in which the substrate 1 is coated with a resin containing a filler that can form surface irregularities upon drying. In the case of the flexible substrate, they can be formed by a method in which a filler is internally added to the substrate 1, a method in which a resin containing a filler is coated, or a method in which a resin that can form surface irregularities upon stretching and drying is coated.

As the magnetic recording layer 2, it is possible to use, for example, a ferromagnetic alloy film mainly composed of Fe, Co and Ni, a ferromagnetic oxide film or a ferromagnetic nitride film. These magnetic recording layers can be formed by physical vapor deposition such as vacuum deposition, ion plating or sputtering, or plating. Among these, it is particularly effective for the present invention when the magnetic recording layer is formed by vacuum deposition or sputtering and is comprised of a perpendicularly magnetized film mainly composed of Co. Fo example, a Co-Cr perpendicularly magnetized film containing 15 to 23% by weight of Cr and 85 to 77% by weight of Co is effective.

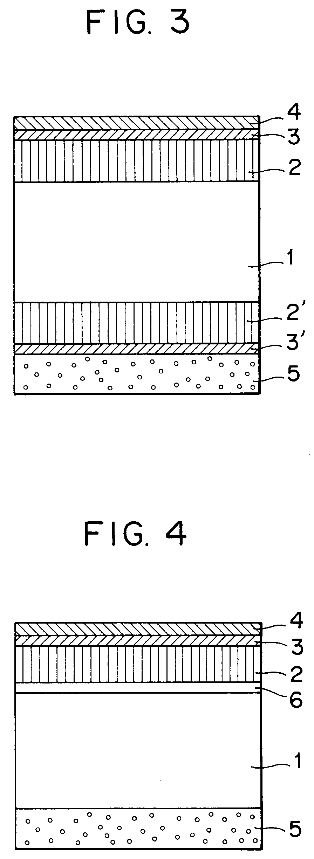

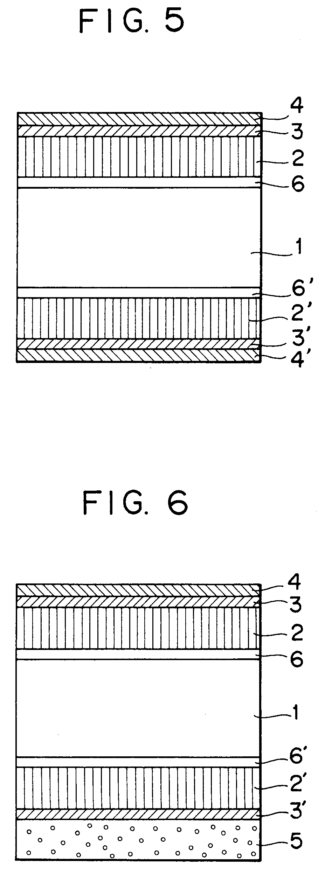

The magnetic recording layer 2 may be either in a single layer or multi-layers. As shown in Fig. 4, 5 or 6, beneath the magnetic recording layer 2, a thin film of Al, Ge, Cr, Ti or $SiO_2$ may be provided for the purpose of improving adhesion to the substrate 1 and improving crystal orientation and magnetic properties; a high-permeability layer such as an Fe-Ni layer or a Co-Zr layer, as a backing layer of the perpendicularly magnetized film; or a Co type semihard magnetic films as an intermediate layer 6 or 6' for the purpose of securing low-region signals of the medium.

The protective layer 3 is comprised of a thin film mainly composed of silicon oxide, and has a sheet resistivity of $1 \times 10^{13}$ Ω/Sq or more, preferably $1 \times 10^{14}$ Ω/Sq or more, and more preferably from $1 \times 10^{14}$ to $1 \times 10^{17}$ Ω/Sq. A protective layer with a sheet resistivity less than $1 \times 10^{13}$ Ω/Sq may result in a coarse film and an insufficient hardness and hence may have a poor wear resistance. A magnetic recording layer with a sheet resistivity more than $1 \times 10^{17}$ Ω/Sq may result in an increase in internal stress of the film to cause fine cracks in the film, cause separation of the film from its base or, in the case of flexible mediums, cause curling.

The silicon oxide contained in the protective layer 3 as a main component may preferably be in an amount of 80% by weight or more, and more preferably 85% by weight or more.

The protective layer 3 can be formed by physical vapor deposition such as vacuum deposition, ion plating or sputtering, or by solution coating. When it is formed by physical vapor deposition, it is preferable to use Si, SiO or $SiO_2$ as a vapor deposition source, and a feed gas of 30% or less based on the total pressure (Ar + feed gas).

In the case when the protective layer is formed by physical vapor deposition, the sheet resistivity of the protective layer can be controlled by regulating degree of ultimate vacuum, pressure of sputtering gas (mainly argon), partial pressure of feed gas, substrate temperature, power to be applied (power density of a target), and layer thickness. In particular, it greatly depends on the sputtering gas pressure. When, for example, the protective layer 3 is formed using an RF magnetron sputtering apparatus, the protective layer according to the present invention can be formed using an $SiO_2$ target under conditions of an argon gas pressure, i.e., a sputtering gas pressure, of 0.3 Pa or less (no feed gas), an applied power of 1 kW or more (when a target of 6 inches in diameter is used) and a film formation rate of 400 Å/min or more. When the feed gas is used, oxygen or hydrogen is suitable. The sheet resistivity tends to become higher as the sputtering gas pressure is smaller and the power density is higher.

As for the case in which the protective layer 3 is formed by solution coating, the sheet resistivity of the protective layer 3 can be controlled by regulating concentration, curing temperature, curing time, use or non-use of a heat treatment and its temperature, and layer thickness.

In the present invention, the sheet resistivity of the protective layer 3 refers to a value measured by the following method.

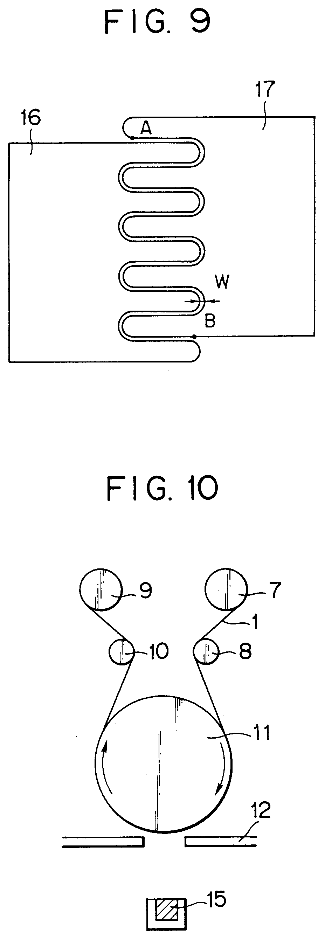

Under the same conditions for the formation of the silicon oxide film protective layer 3 on the magnetic recording layer, a silicon oxide film with a thickness of 1 μm is formed on a silicon wafer, and comblike Al electrodes 16 and 17 as shown in Fig. 9 are formed by vapor deposition on this silicon oxide film.

The silicon wafer used is available from Japan Silicon Co., Ltd. under a trade name of SILICON WAFERS. On the surface of this silicon wafer, a thermal oxide film is formed in a thickness of about 0.2 μm by heating. This silicon wafer has the following specifications:

| | |
|---|---|
| Crustal: | cz |
| Type: | N |
| Thickness: | 510-540 μm |
| Diameter: | 99.5-100.5 mm |

The electrodes 16 and 17 are 0.2 μm each in thickness, 0.25 mm in distance W between electrodes, and 50 mm in length ℓ at the curve along which both the electrodes are opposing (in Fig. 9, the length of the curve from point-A to point-B of the electrode 17).

A DC voltage $V_1$ (10 V at maximum) is applied between the electrodes 16 and 17. From a value of leak current $i_1$ on that occasion, sheet resistivity $r_1$ is calculated with equation (A):

$$r_1 = V_1/i_1 \times 50/0.25 \quad (A)$$

In the above equation (A), 0.25 is the distance W of the electrodes, and 50 is the length ℓ at the curve along which both the electrodes are opposing.

Measurement is made using, for example, a picoammeter (manufactured by YHP Co.; 4140B pA METER/DC VOLTAGE SOURCE). This measuring apparatus is placed in a shield box and is purged with nitrogen after a sample has been set in.

The silicon oxide contained in the protective layer as a main component may preferably be in a quantity of 80% by weight or more, and more preferably 85% by weight or more, based on the weight of the protective layer. The film containing silicon oxide as the main component has a problem that the internal stress of the film is large and tends to change depending on environmental conditions, for example, in an environment of high temperature and high humidity (for example, 40°C, 80%RH) or low temperature (for example, -5°C). In general, the inner stress changes from compression stress to tensile stress as temperature rises. A great change in internal stress of the film causes a change in flatness of the magnetic recording medium, causes cracking of the film or cause film separation.

Curling also tends to occur in the magnetic recording medium formed, when the protective layer has an extremely smaller coefficient of thermal expansion than the ferromagnetic metal thin film that constitutes the magnetic recording layer.

When there is a possibility of occurrence of the aforesaid two problems, it is preferred that at least one element selected from the group consisting of B, C, N, P, S, Al, Ti, V, Cr, Zn, Ge, Zr, Nb, Mo, Ta, Mg, Hf, Au and Pt or a compound containing at least one of these elements is incorporated in the protective layer. Among these, B, $Al_2O_3$, $TiO_2$, $B_2O_3$, $B_2O_5$ and MgO are particularly preferred. Any of them may be added to the extent that does not cause any lowering of the protective function (wear characteristics), i.e., in an amount of from 10 to 20% by weight based on the weight of the protective layer 3.

It is preferable for the substrate 1 to have a thickness ranging from 0.5 to 3 mm in the case of rigid disks and to be a non-magnetic substrate. In the case of tapes or floppy disks, it may preferably be a polymeric film having a thickness ranging from 3 to 75 $\mu$m. In particular, in the case of floppy disks with a small diameter as exemplified by floppy disks of 2 inches in diameter, the substrate may preferably have a thickness of from 7 $\mu$m to 40 $\mu$m, and more preferably from 18 $\mu$m to 35 $\mu$m.

As for the magnetic recording layer 2, it may well have a layer thickness of from about 0.1 to 10 $\mu$m, and there are no particular limitations.

The protective layer 3 should have a layer thickness of 500 Å or less, and preferably 300 Å or less. The lower limit of the thickness of the protective layer 3 may be in the extent that does not damage the function of the protective layer 3, and may be, for example, 50 Å or more, and preferably 100 Å or more.

Use of the protective layer having such a layer thickness makes it possible to obtain a magnetic recording medium in which the spacing loss has been satisfactorily decreased.

An organic lubricating layer 4 may also be optionally formed on the protective layer 3. This enables improvement in wear resistance and durability under severer environmental conditions as an environment of high temperature and high humidity or low temperature.

As materials for the organic lubricating layer 4, it is possible to use a fluorine resin, a silicone oil, a surface active agent, a saturated fatty acid or an ester type oligomer. This layer can be formed by solution coating such as dipping or spin coating or physical vapor deposition such as vacuum deposition or sputtering.

For the silicon oxide protective layer of the present invention, a lubricating layer comprised of a water-repellent silane coupling agent is particularly effective because of its excellent adhesion and water-repellency in an environment of high temperature and high humidity.

The organic lubricating layer 4 should have a layer thickness of 100 Å or less, and preferably 50 Å or less.

The presence of the organic lubricating layer 4 may cause a spacing loss, similar to the protective layer. However, the layer thickness as described above can be effective for sufficiently decrease the spacing loss.

On the back of the polymeric substrate 1, a back coat layer 5 may be optionally formed by coating fo the purpose of lubrication.

The back coat layer 5 may be formed of a composition commonly used which is prepared by dispersing inorganic fine particles such as carbon black, graphite or $CaCO_3$ in a binder such as polyester resin, polyurethane resin or urethane resin and can be coated to form a coating.

The magnetic recording medium of the present invention may comprise, as shown in Fig. 2, the polymeric film substrate 1 and, formed on both sides thereof, magnetic recording layers 2, 2', protective layers 3, 3' and organic lubricating layers 4, 4', or may comprise, as shown in Fig. 3, a protective layer 3' to the surface of which the back coat layer 5 is added. In the magnetic recording medium having the structure as shown in Fig. 2, the magnetic recording layers on both sides can be used as magnetic recording layers.

In Fig. 2, the magnetic recording layers 2 and 2' may have the same thickness when simultaneously formed. When either layer is formed first, the curling of the medium may not be well corrected if the layers are formed in the same thickness. This is considered due to a change in thermal properties of the substrate film, which is caused when a magnetic recording layer is formed on one side of the substrate, and hence gives conditions substantially different from those in the formation of the first magnetic recording layer when another magnetic recording layer is subsequently formed on the other side of the substrate. Accordingly, when it is necessary to control the curling, either magnetic recording layer 2 or 2' may be appropriately thinner. Similarly, the silicon dioxide thin films 3 and 3' may also have the same thickness, or either one may be appropriately made thinner.

The present invention will be specifically described below by giving Examples.

Example 1

The magnetic recording medium of the present invention, having the structure as shown in Fig 3 was produced in the following way.

On both sides of a polyimide film substrate 1 (trade name: Upilex S-Type; available from Ube Industries, Ltd.; coefficient of thermal expansion: $1.2 \times 10^{-5}$ cm/cm/°C; modulus in tension: 1,020 kg/mm$^2$; surface roughness: 300 Å as a height of protuberances corresponding to the number at 0.01% of protuberances examined in order of height, and $6 \times 10^6$ protuberances/mm$^2$ as a protuberance density), Co-Cr perpendicularly magnetized films 2 and 2' and subsequently silicon oxide thin films 3 and 3' were formed using an RF magnetron sputtering apparatus.

Fig. 8 schematically illustrates the RF magnetron sputtering apparatus used in the present Example (a modified apparatus of SPF-300L, manufactured by NEC Anelva Co., incorporated with a tape transport system). To the continuous-sheet polyimide film substrate 1 with a thickness of 25 $\mu$m and a width of 220 mm, heat treatment was applied in vacuo before the formation of the magnetic layers. Stated specifically, the continuous-sheet polyimide film substrate 1 was delivered in contact with a rotating drum 11 (diameter: 500 mm) whose temperature had been raised to 250°C in vacuo and the heat treatment was applied while maintaining an ultimate pressure of $2 \times 10^{-3}$ Pa or less. During the treatment, the polyimide film substrate 1 was under a tension of 1.2 kg and was delivered at a speed of 6 cm/min.

After the heat treatment, the system was evacuated until the degree of ultimate vacuum reached $5 \times 10^{-4}$ Pa or less, and thereafter the Co-Cr perpendicularly magnetized films were formed. A target 13 was 6 inches in diameter, and space between the target 13 and the substrate 1 was 70 mm. The target 13 was composed of 80% by weight of Co and 20% by weight of Cr. The films were formed under conditions of an argon gas pressure of 0.1 Pa, an applied power of 500 W, a film-forming rate of 800 Å/min, a rotating drum 11 temperature of 100°C, a polyimide film substrate 1 tension of 1.2 kg and a film transport speed of 6 cm/min. The Co-Cr magnetic recording layer thus formed was 0.25 $\mu$m in layer thickness. After the magnetic recording layer 2 was formed on one side in this way, the Co-Cr magnetic recording layer 2' was also formed on the back surface under the same conditions for film formation. In Fig. 8, a roller 7 is a roller for feeding the substrate 1; rollers 8 and 10, transporting rollers; and a roller 9, a wind-up roller. Reference numeral 12 denotes a shield.

On the Co-Cr magnetic recording layers 2 and 2', the silicon oxide thin films 3 and 3' were continuously formed as protective layers, using the same RF magnetron sputtering apparatus. The protective layers 3 and 3' were formed using an SiO$_2$ target 14 of 6 inches in diameter and under conditions of a degree of ultimate vacuum of $2.0 \times 10^{-5}$ Pa, a rotating drum 11 temperature of 100°C, an argon gas pressure of 0.1 Pa, an applied power of 1 kW and a film formation rate of 400 Å/min. The protective layers thus formed were each 200 Å in thickness.

Next, a silicon wafer of 4 inches in diameter and with a thermal oxide film on its surface (available from Nippon Silicon Co., Ltd., with details as previously noted) was set on the surface of the drum 11 at its part positioned above the SiO$_2$ target 14 of the sputtering apparatus shown in Fig. 8, and a silicon oxide film was formed in a layer thickness of 1 $\mu$m under the same conditions as the aforesaid silicon oxide thin films 3, 3'. Then, another vapor deposition apparatus was set up and Al electrodes were formed in a thickness of 0.2 $\mu$m in the form as shown in Fig. 9.

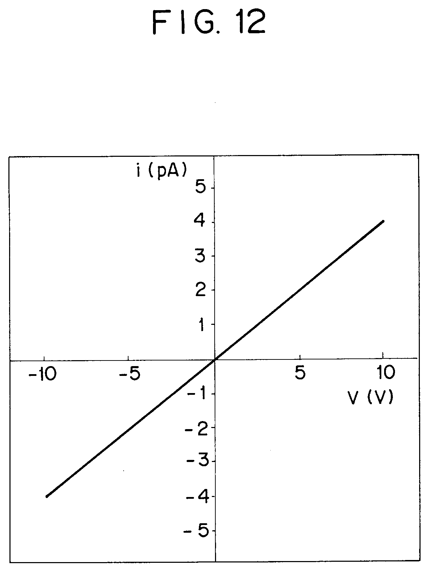

The i-V characteristics of the present sample, measured with a picoammeter are shown in Fig. 12. From this graph, the present sample was confirmed to have a sheet resistivity of $5.0 \times 10^{14}$ $\Omega$/Sq.

Pinhole density of the silicon oxide thin films 3 and 3' was also measured by the copper decoration method (which utilizes electrochemical reaction occurring in an organic solvent, and is detailed in Shiono and Yashiro, Applied Physics, Vol. 45, No. 10, 1976, p.952, entitled "Evaluation of Pinholes in SiO$_2$ Thin Films") to reveal that it was 3.1 holes/cm$^2$ on the average.

Subsequently to the formation of the protective layers 3 and 3', a solution prepared by diluting fluorosilane with IPA to a fluorosilane concentration of 0.1% by weight was coated on the protective layer 3 by spin coating in a thickness of 20 Å.

Next, only on the protective layer 3', a back coat solution (trade name: TPB-3091 Black; available from Toyo Ink Mfg. Co., Ltd.) comprising a polyester type binder incorporated with carbon black and fine CaCO$_3$ particles was coated to form a back coat layer 5 in a thickness of 0.5 $\mu$m.

The magnetic recording medium thus produced was punched into a disk of 45 mm in diameter to give a video floppy disk.

The video floppy disk obtained was set on a commercially available video floppy disk drive deck (a modified player of Canon Still Video Player RV301 (trade name, manufactured by Canon Inc.) to measure C/N (9 MHz) and make an environmental durability test.

In the durability test, only reproducing was carried out after signals of 9 MHz were recorded, and the time by which the reproducing output attenuated to a value of the initial value minus 3 dB was defined as durability time. The durability was evaluated on the basis of this durability time.

The durability test of the video floppy disk was carried out using its 25th track and in an environment of normal temperature (23°C, 60%RH), an environment of high temperature and high humidity (40°C, 80%RH) and an environment of low temperature (-5°C).

The C/N of the magnetic recording medium of the present Example was +8.0 dB, assuming as 0 dB the C/N level of a commercially available coated medium (trade name: Canon Video Floppy Disk VF-50; manufactured by Canon Inc.; hereinafter "MP") (C/N level of MP: hereinafter "MPL").

In the durability test in the normal temperature environment, the reproduction output dropped by 0.2 dB with respect to the initial value, on the lapse of 48 hours (about 10,000,000 passes).

In the durability test in the high temperature and high humidity environment, the reproduction output dropped by 1.5 dB with respect to the initial value, on the lapse of 48 hours.

In the durability test in the low temperature environment, the reproduction output dropped by 0.8 dB with respect to the initial value, on the lapse of 48 hours.

From the above results, the video floppy disk obtained in the present Example was proved to have a greatly large C/N and also have a reliance durability at the level of practical use.

The video floppy disk obtained in the present Example was left to stand in a natural environment for a year and thereafter the evaluation was made in the same manner as described above, so that the same results were obtained. This proves that the magnetic recording medium of the present invention also has a superior storage durability.

## Example 2

A magnetic recording medium (a video floppy disk) was produced in the same manner as in Example 1 except that the protective layers, silicon oxide thin films 3 and 3', were formed under film-forming conditions in which the argon gas pressure was changed to 0.13 Pa.

The silicon oxide thin films thus formed had a sheet resistivity of $1.0 \times 10^{14}$ $\Omega$/Sq.

The measurement of C/N and the durability test on the video floppy disk obtained were made in the same manner as in Example 1. Results obtained are shown in Table 1.

Namely, C/N (9 MHz) was MPL + 7.1 dB.

In the still durability test in the normal temperature environment, the reproduction output dropped by 1.0 dB with respect to the initial value, on the lapse of 48 hours (about 10,000,000 passes).

In the durability test in the high temperature and high humidity environment, the reproduction output dropped by 2.0 dB with respect to the initial value, on the lapse of 48 hours.

In the durability test in the low temperature environment, the reproduction output dropped by 1.6 dB with respect to the initial value, on the lapse of 48 hours.

From the above results, the video floppy disk obtained in the present Example was proved to have a greatly large C/N and also have a reliance durability at the level of practical use.

## Example 3

A magnetic recording medium (a video floppy disk) was produced in the same manner as in Example 1 except that the protective layers, silicon oxide thin films 3 and 3', were formed under film-forming conditions in which the argon gas pressure was changed to 0.16 Pa.

The silicon oxide thin films thus formed had a sheet resistivity of $6.0 \times 10^{13}$ $\Omega$/Sq.

The measurement of C/N and the durability test on the video floppy disk obtained were made in the same manner as in Example 1. Results obtained are shown in Table 1.

C/N was MPL + 5.3 dB.

In the still durability test at normal temperature, the reproduction output dropped by 1.9 dB with respect to the initial value, on the lapse of 48 hours (about 10,000,000 passes).

In the durability test in the high temperature and high humidity environment, the durability time was 30 hours (about 6,500,000 passes).

In the durability test in the low temperature environment, the durability time was 40 hours (about 8,600,000 passes).

From the above results, the video floppy, disk obtained in the present Example was proved to have a greatly large C/N and also, although the durability time did not reach 48 hours in the high temperature and high humidity environment and the low temperature environment, well satisfied a target level (1,000,000 passes or more in the high temperature and high humidity environment and the low temperature environment) of data recording floppy disks. Namely, its reliance durability was proved to be at the level of practical use.

Example 4

A magnetic recording medium (a video floppy disk) was produced in the same manner as in Example 1 except that the protective layers, silicon oxide thin films 3 and 3', were formed under film-forming conditions in which the argon gas pressure was changed to 0.2 Pa.

The silicon oxide thin films thus formed had a sheet resistivity of $1.0 \times 10^{13}$ Ω/Sq.

The measurement of C/N and the durability test on the video floppy disk obtained were made in the same manner as in Example 1. Results obtained are shown in Table 1.

C/N was MPL + 3.0 dB.

In the still durability test at normal temperature, the reproduction output dropped by 2.5 dB with respect to the initial value, on the lapse of 48 hours (about 10,000,000 passes).

In the durability test in the high temperature and high humidity environment, the durability time was 5 hours (about 1,100,000 passes).

In the durability test in the low temperature environment, the durability time was 9 hours (about 1,900,000 passes).

From the above results, the video floppy disk obtained in the present Example was proved to have a greatly large C/N and also, although the durability time did not reach 48 hours in the high temperature and high humidity environment and the low temperature environment, well satisfied a target level (1,000,000 passes or more in the high temperature and high humidity environment and the low temperature environment) of data recording floppy disks. Namely, its reliance durability was proved to be at the level of practical use.

Comparative Example 1

A magnetic recording medium (a video floppy disk) was produced in the same manner as in Example 1 except that the protective layers, silicon oxide thin films 3 and 3', were formed under film-forming conditions in which the argon gas pressure was changed to 0.3 Pa.

The silicon oxide thin films thus formed had a sheet resistivity of $5.3 \times 10^{12}$ Ω/Sq.

The measurement of C/N and the durability test on the video floppy disk obtained were made in the same manner as in Example 1. Results obtained are shown in Table 1.

C/N was MPL + 1.0 dB.

Durability test results were as follows: The durability time was 13 hours (about 2,800,000 passes) in the normal temperature environment, 4 hours (about 900,000 passes) in the high temperature and high humidity environment, and 8 hours (about 1,700,000 passes in the low temperature environment, showing an extremely poor durability in the high temperature and high humidity environment.

In the medium after the durability test, scratches were found to have occurred and powder was found to have adhered around the scratches. Many scratches and deposits were also seen on the surface of the head.

Example 5

A magnetic recording medium (a video floppy disk) was produced in the same manner as in Example 1 except that no lubricating layer was formed.

The protective layers formed here had a sheet resistivity of $5.0 \times 10^{14}$ Ω/Sq.

The measurement of C/N and the durability test on the video floppy disk obtained were made in the same manner as in Example 1. Results obtained are shown in Table 1.

C/N was MPL + 8.0 dB. With regard to the durability, the durability time was 48 hours (about 10,000,000 passes) in the normal temperature environment, which was substantially the same as in Example 1 (reproduction output was minus 0.5 dB from the initial value, on the lapse of 48 hours), but 20 hours (about 4,300,000 passes) in the high temperature and high humidity environment. In the low temperature environment, the durability time was 25 hours (about 5,400,000 passes).

From the above results, the video floppy disk obtained in the present Example was proved to have a greatly large C/N and also, although the durability time did not reach 48 hours in the high temperature and high humidity environment and the low temperature environment, well satisfied a target level (1,000,000 passes or more in the high temperature and high humidity environment and the low temperature environment) of data recording floppy disks. Namely, its reliance durability was proved to be at the level of practical use.

## Example 6

A magnetic recording medium (a video floppy disk) was produced in the same manner as in Example 1 except that Upilex S-Type (available from Ube Industries, Ltd.) having a coefficient of thermal expansion of $1.2 \times 10^{-5}$ cm/cm/°C, a modulus in tension of 1,050 kg/mm$^2$ and a surface roughness Rmax of 50 Å or less and provided with no fine irregularities on its surface was used as the polyimide film substrate 1.

The protective layers formed here had a sheet resistivity of $5.0 \times 10^{14}$ Ω/Sq.

The measurement of C/N and the durability test on the video floppy disk obtained were made in the same manner as in Example 1. Results obtained are shown in Table 1.

C/N was MPL + 10.0 dB. With regard to the durability, the durability time was 14 hours (about 3,000,000 passes) in the normal temperature environment, 5 hours (about 1,100,000 passes) in the high temperature and high humidity environment, and 8 hours (about 1,700,000 passes) in the low temperature environment. The medium in which no fine irregularities were formed on its surface enabled decrease in spacing loss and improvement in reproduction output (C/N), but brought about a slight lowering of durability. However, the durability was within the range of the level of practical use required for data recording floppy disks.

## Example 7

A magnetic recording medium (a video floppy disk) was produced in the same manner as in Example 1 except that a TiO$_2$ pellet was welded to an SiO$_2$ target of 6 inches in diameter so as to give its area ratio of about 15% and the resulting target was used as the target used for the formation of the protective layers.

The Si-Ti-O thin films thus formed had a sheet resistivity of $2.8 \times 10^{14}$ Ω/Sq.

The measurement of C/N and the durability test on the video floppy disk obtained were made in the same manner as in Example 1. Results obtained are shown in Table 1.

C/N was MPL + 6.8 dB. With regard to the durability, the durability time was 48 hours (about 10,000,000 passes) in the normal temperature environment, about 35 hours (about 7,600,000 passes) in the high temperature and high humidity environment, and 48 hours or more in the low temperature environment. The medium in which the protective-layer containing silicon oxide as the main component was changed to the layer comprising Si-O to which Ti was added as an additive element enabled improvement in the durability in the high temperature and high humidity environment and the low temperature environment.

## Example 8

The magnetic recording medium of the present invention, having the structure as shown in Fig 1 was produced in the following way.

On the surface of a 7.5 $\mu$m thick polyimide film substrate 1 (trade name: Upilex Copolymer Type; available from Ube Industries, Ltd.; coefficient of thermal expansion: $1.5 \times 10^{-5}$ cm/cm/°C; modulus in tension: 580 kg/mm$^2$; surface roughness: 320 Å as a height of protuberances corresponding to the number at 0.01% of protuberances examined in order of height, and $5 \times 10^6$ protuberances/mm$^2$ as a protuberance density), a Co-Cr perpendicularly magnetized film 2 was formed by electron beam (EB) vapor deposition.

Fig. 10 schematically illustrates an EB apparatus used in the present Example.

No preheating of the polyimide film substrate 1 was carried out. The temperature of a rotating drum 11 was set to 200°C, and a vapor deposition source 15 comprised of an alloy of 80% by weight of Co and 20% by weight of Cr was exposed to electron beams to continuously carry out vapor deposition. The film formation was at a rate of 0.5 $\mu$m/min and in a layer thickness of 0.35 $\mu$m.

Next, on the Co-Cr perpendicularly magnetized film 2, the silicon oxide thin film 3 was formed by sputtering as the protective layer. The protective layer was formed using the same apparatus as used in Example 1 and using as the target an SiO$_2$ target of 6 inches in diameter, under conditions of a rotating drum temperature of 200°C, an argon gas pressure of 0.1 Pa, an O$_2$ partial pressure of 20%, an applied power of 1 kW and a film formation rate of 400 Å/min. The film thus formed was in a layer thickness of 100 Å. The protective layer comprising the silicon oxide thin film formed here had a sheet resistivity of $2.0 \times 10^{15}$ Ω/Sq.

Next, on the protective layer 3, a film of FEP resin (available from Du Pont Co.) was formed in a thickness of about 20 Å as the lubricating layer 4.

On the back of the polyimide film substrate 1, the back coat layer 5 was formed by coating. Its material was comprised of a urethane type binder containing carbon black and fine TiO$_2$ particles (trade name: TB-5014 Black; available from Toyo Ink Mfg. Co., Ltd.), and its layer thickness was 0.5 $\mu$m.

EP 0 538 887 A1

The magnetic recording medium thus produced was cut in a width of 8 mm to give a magnetic tape.

Using the magnetic tape obtained, recording and reproducing were performed on a commercially available 8 mm video deck (EV-A80; manufactured by Sony Corp.) to evaluate RF reproduction output, pass durability and still durability. Results obtained are shown in Table 2.

Here, the pass durability test is carried out by putting the tape to pass run of only reproduction after RF signals have been recorded. The time by which the reproduction output attenuates to a value of the initial value minus 3 dB is defined as pass durability time to make evaluation. A target specification of the level of practical use is 200 passes.

The still durability test is carried out by putting the tape to still run of only reproduction after RF signals have been recorded. The time by which the reproduction output attenuates to a value of the initial value minus 3 dB is defined as still durability time to make evaluation. A target specification of the level of practical use is 120 minutes.

In the present Example, the RF reproduction output was 4.0 dB higher than the RF reproduction output of a commercially available coated tape (trade name: Canon 8 mm Video Tape P-6; manufactured by Canon Inc.) (hereinafter "MPL'"). Both the pass durability and the still durability were at the level of practical use.

Example 9

A magnetic tape was produced in the same manner as in Example 8 except that the protective layer, silicon oxide thin film 3, was formed under film-forming conditions in which the argon gas pressure was changed to 0.1 Pa and the oxygen partial pressure to 25%.

The silicon oxide thin film thus formed had a sheet resistivity of $1.0 \times 10^{16}$ Ω/Sq.

Evaluation on the magnetic tape obtained was made in the same manner as in Example 8. Results obtained are shown in Table 2.

RF reproduction output was MPL' + 3.7 dB. Both the pass durability and the still durability were at the level of practical use.

Example 10

A magnetic tape was produced in the same manner as in Example 8 except that the protective layer, silicon oxide thin film 3, was formed under film-forming conditions in which the argon gas pressure was changed to 0.1 Pa and the oxygen partial pressure to 30%.

The silicon oxide thin film thus formed had a sheet resistivity of $1.0 \times 10^{17}$ Ω/Sq.

Evaluation on the magnetic tape obtained was made in the same manner as in Example 8. Results obtained are shown in Table 2.

RF reproduction output was MPL' + 3.3 dB. Both the pass durability and the still durability were at the level of practical use.

Example 11

The medium having the structure as shown in Fig. 7 was produced in the following way.

First, on a 1.27 mm thick aluminum alloy substrate 1, aluminum anodizing was applied by a known method to form aluminum oxide surface-treated layers 22 and 22' each in a thickness of about 15 μm. Subsequently, their surfaces were mirror-polished and then thoroughly washed. The substrate thus treated was set in a sputtering apparatus, and an in-line system was operated to successively form Mo-Cu-Permalloy (JIS C-2531; compositional ratio: 78% Ni, 4% Mo, also containing Cu and Cr, and the balance of Fe) films 6 and 6' as soft magnetic layers and Co-Cr perpendicularly magnetized films 2 and 2' as magnetic recording layers by magnetron sputtering in a thickness of 0.5 μm for each. These were formed under conditions of a substrate temperature of 120°C, a target size of 8 inches (203.2 mm) in diameter, a Co-Cr target composition of 80 % by weight of Co and 20% by weight of Cr, an argon gas pressure of 0.2 Pa, an applied power of 1 kW and a film formation rate of 400 Å/min.

Next, on the Co-Cr magnetic layers 2 and 2', silicon oxide thin films 3 and 3' were formed as the protective layers, using an RF magnetron sputtering apparatus. This formation was carried out using $SiO_2$ target of 6 inches in diameter under conditions of a substrate temperature of 120°C, an argon gas pressure of 0.1 Pa, an applied power of 1 kW and a film formation rate of 400 Å/min. The films formed were each in a thickness of 270 Å.

The sheet resistivity of each silicon oxide thin film thus formed was measured to reveal that it was $7.0 \times 10^{14}$ Ω/Sq.

12

EP 0 538 887 A1

Next, on the protective layers 3 and 3', lubricating layers 4 and 4' were formed by spin-coating an IPA dilute solution of fluorosilane in a concentration of 0.5% by weight so as to give a dried coating thickness of 30 Å, and further coating thereon a Freon dilute solution of Krytox (available from Du Pont Co.) in a concentration of 0.05% by weight so as to give a dried coating thickness of 30 Å.

Electromagnetic conversion characteristics of the magnetic recording medium thus obtained, having a diameter of 3.5 inches in diameter, was measured. As a result, high-density recording of 70 kbpi was possible.

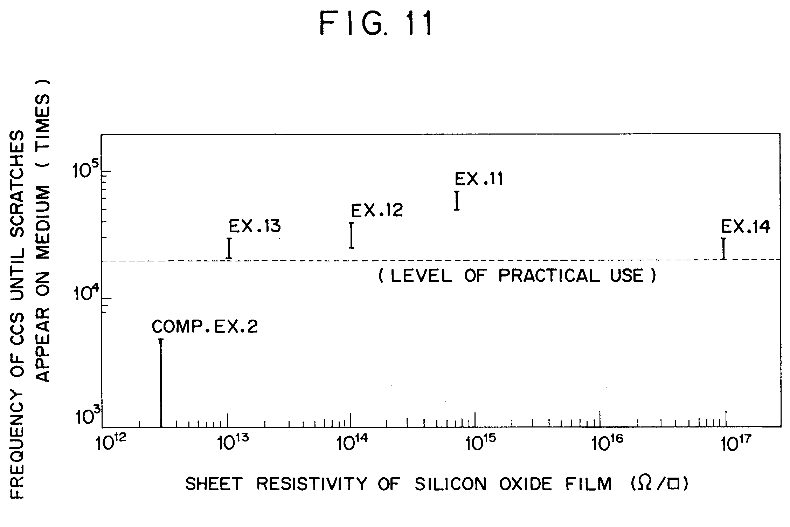

The magnetic recording medium was also set on a 3.5 inch hard disk drive SRD2040Z, manufactured by Sony Corp., and CSS tests were carried out 10 times on different tracks. Results obtained are shown in Fig. 11. The frequency of CSS until scratches appear on the medium was 50,000 to 70,000 times. At 20,000 times, a borderline of the level of practical use, neither changes nor damages were seen at all in the medium.

The medium was also left to stand in an environment of high temperature and high humidity (85°C, 85%RH) for 500 hours. However, no changes were seen in the medium.

From the above results, the medium of the present Example can be said to have a greatly higher reproduction output than conventional coated magnetic recording mediums, and also have durability, wear resistance and environmental resistance all at the level of practical use.

Example 12

A magnetic recording medium was produced in the same manner as in Example 11 except that the protective layers, silicon oxide thin films 3 and 3', were formed under film-forming conditions in which the argon gas pressure was changed to 0.15 Pa.

The silicon oxide thin films 3 and 3' thus formed had a sheet resistivity of $1.0 \times 10^{14}$ $\Omega$/Sq.

Evaluation on the medium obtained was made in the same manner as in Example 11. As a result, as shown in Fig. 11, the frequency of CSS until scratches appear on the medium was 25,000 to 40,000 times. In the high temperature and high humidity environment test as shown in Example 11, no changes were seen on the present medium for 500 hours or more. The present medium also showed substantially the same electromagnetic conversion characteristics as the medium of Example 11.

Example 13

A magnetic recording medium was produced in the same manner as in Example 11 except that the protective layers, silicon oxide thin films 3 and 3', were formed under film-forming conditions in which the argon gas pressure was changed to 0.25 Pa.

The silicon oxide thin films 3 and 3' thus formed had a sheet resistivity of $1.0 \times 10^{13}$ $\Omega$/Sq.

Evaluation on the medium obtained was made in the same manner as in Example 11. As a result, as shown in Fig. 11, the frequency of CSS until scratches appear on the medium was 21,000 to 30,000 times.

In the high temperature and high humidity environment test as shown in Example 11, no changes were seen on the present recording medium for 500 hours or more. The present medium also showed substantially the same electromagnetic conversion characteristics as the medium of Example 11.

Comparative Example 2

A magnetic recording medium was produced in the same manner as in Example 11 except that the protective layers, silicon oxide thin films 3 and 3', were formed under film-forming conditions in which the argon gas pressure was changed to 0.4 Pa.

The silicon oxide thin films 3 and 3' thus formed had a sheet resistivity of $3.0 \times 10^{12}$ $\Omega$/Sq.

Evaluation on the medium obtained was made in the same manner as in Example 11. As a result, as shown in Fig. 11, the frequency of CSS until scratches appear on the medium was 1,000 to 5,000 times. For the purpose of practical use, mediums had to be durable to 20,000 time CSS tests, but the medium of the present Comparative Example did not show the durability reaching the level of practical use in all tracks.

The high temperature and high humidity environment test as shown in Example 11 was also made on the medium of the present Comparative Example. As a result, minute corrosions had occurred at two or three points. The medium of the present Comparative Example showed substantially the same electromagnetic conversion characteristics as the medium of Example 11.

From the above results, the medium of the present Comparative Example was proved to have a greatly high reproduction output, but have no durability and wear resistance reaching the level of practical use. It also had a problem in environmental resistance.

Example 14

A magnetic recording medium was produced in the same manner as in Example 11 except that the protective layers, silicon oxide thin films 3 and 3', were formed under film-forming conditions in which the argon gas pressure was changed to 0.1 Pa.

The silicon oxide thin films 3 and 3' thus formed had a sheet resistivity of $1.0 \times 10^{17}$ Ω/Sq.

Evaluation on the medium obtained was made in the same manner as in Example 11. As a result, as shown in Fig. 11, the frequency of CSS until scratches appear on the medium was 20,000 to 30,000 times.

In the high temperature and high humidity environment test as shown in Example 11, little changes were seen on the present recording medium for 500 hours or more, but cracks were partially produced therein to the extent there was no problem in practical use. The present medium also showed substantially the same electromagnetic conversion characteristics as the medium of Example 11.

14

Table 1

| | Sheet resistivity | C/N*1 (9MHz) | Durability time (hrs)*2 | | |
|---|---|---|---|---|---|
| | | | Normal temp. | High temp. High humid. | Low temp. |
| | ($\Omega$/Sq) | (dB) | (23°C,60%RH) | (40°C,80%RH) | (−5°C) |
| Example: | | | | | |
| 1 | $5.0\times10^{14}$ | +8.0 | >48 | >48 | >48 |
| 2 | $1.0\times10^{14}$ | +7.1 | >48 | >48 | >48 |
| 3 | $6.0\times10^{13}$ | +5.3 | >48 | 30 | 40 |
| 4 | $1.0\times10^{13}$ | +3.0 | >48 | 5 | 9 |
| Comparative Example: | | | | | |
| 1 | $5.3\times10^{12}$ | +1.0 | 13 | 1 | 1 |
| 5 | $5.0\times10^{14}$ | +8.0 | >48 | 20 | 25 |
| 6 | $5.0\times10^{14}$ | +10.0 | 14 | 5 | 8 |
| 7 | $2.8\times10^{14}$ | +6.8 | >48 | 35 | >48 |

Table 2

| | Sheet resistivity ($\Omega$/Sq) | *1 RF output (dB) | Pass *3 durability (times) | Still *3 durability (times) |
|---|---|---|---|---|
| Example: | | | | |
| 8 | $2.0\times10^{15}$ | +4.0 | >200 | >120 |
| 9 | $1.0\times10^{16}$ | +3.7 | >200 | >120 |
| 10 | $1.0\times10^{17}$ | +3.3 | >200 | >120 |

*1:      The output level of the commercially available coated magnetic recording medium (MP) is assumed as 0 dB.

*2:      The durability time refers to the time by which the reproducing output has attenuated to a value of the initial value minus 3 dB.  The level of practical use required for floppy disks is 3,000,000 passes or more (about 13 hours in the case of video floppy disks) in the normal temperature environment and 1,000,000 passes or more (about 5 hours) in the high temperature and high humidity environment.

*3:      The time by which the reproducing output has attenuated to a value of the initial value minus 3 dB is regarded as durability time.  The level of practical use is 200 passes or more in the pass durability and 120 minutes or more in the still durability.

As described above, as the protective layer formed on the magnetic recording layer, the magnetic recording medium of the present invention has the thin film containing silicon oxide as the main component, having a sheet resistivity of $1 \times 10^{13}$ $\Omega$/Sq or more, preferably $1 \times 10^{14}$ $\Omega$/Sq or more, and more preferably from $1 \times 10^{14}$ to $1 \times 10^{17}$ $\Omega$/Sq, and hence has superior wear resistance, environmental durability and long-term storage durability.

A magnetic recording medium is disclosed which comprises a substrate, and a magnetic recording layer and a protective layer containing silicon oxide as the main component, which are formed on at least one surface of the substrate in the order as mentioned, a sheet resistivity of the protective layer being $1 \times 10^{13}$ $\Omega$/$\square$. The magnetic recording medium is excellent in wear resistance, environmental durability and long-term storage durability.

**Claims**

1. A magnetic recording medium comprising a substrate and magnetic recording layer and a protective layer containing silicon oxide as the main component, which are formed on at least one surface of the substrate in the order as mentioned, the protective layer having a sheet resistivity of $1 \times 10^{13}$ $\Omega$/Sq or more.

2. The magnetic recording medium according to claim 1, wherein the protective layer has a sheet resistivity of $1 \times 10^{14}$ $\Omega$/Sq or more.

3. The magnetic recording medium according to claim 1, wherein the protective layer has a sheet resistivity of from $1 \times 10^{14}$ $\Omega$/Sq to $1 \times 10^{17}$ $\Omega$/Sq.

4. The magnetic recording medium according to claim 1, wherein the magnetic recording medium has fine protuberances on its surface, the protuberances being not higher than 600 Å in the ranking corresponding to the number at 0.01% of the total number of protuberances when a statistic distribution of the height of protuberances is taken up and the height of the protuberances in the statistic distribution is examined in order of height, and being in a protuberance density ranging from $1 \times 10^4$ to $1 \times 10^{12}$ protuberances/mm$^2$.

5. The magnetic recording medium according to claim 4, wherein the protuberance density ranges from $1 \times 10^5$ to $1 \times 10^{10}$ protuberances/mm$^2$.

6. The magnetic recording medium according to claim 1, wherein the magnetic recording layer is a perpendicularly magnetized layer containing Co as the main component.

7. The magnetic recording medium according to claim 1, wherein the magnetic recording layer is a Co-Cr perpendicularly magnetized layer containing from 15% by weight to 23% by weight of Cr and from 85% by weight to 77% by weight of Co.

8. The magnetic recording medium according to claim 1, wherein the protective layer comprises at least one element selected from the group consisting of B, C, N, P, S, Al, Ti, V, Cr, Zn, Ge, Zr, Nb, Mo, Ta, Mg, Hf, Au and Pt or a compound thereof.

9. The magnetic recording medium according to claim 1, wherein a lubricating layer comprising a silane coupling agent is further formed on said protective layer.

10. A method for examining a magnetic recording medium comprising a substrate and a magnetic recording layer and a protective layer containing silicon oxide as the main component, which are formed on at least one surface of the substrate in the order as mentioned; the method comprising the steps of;
    forming a thin film containing silicon oxide as the main component, on a silicon wafer under the same conditions as the conditions for forming the protective layer; and
    examining whether or not said thin film has a sheet resistivity of $1 \times 10^{13}$ Ω/Sq or more.

11. The method for examining a magnetic recording medium according to claim 10, wherein the sheet resistivity is from $1 \times 10^{14}$ Ω/Sq to $1 \times 10^{17}$ Ω/Sq.

# FIG. 1

# FIG. 2

# FIG. 3

# FIG. 4

# FIG. 5

# FIG. 6

# FIG. 7

# FIG. 8

EP 0 538 887 A1

# FIG. 9

# FIG. 10

FIG. 11

F I G. 12

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A,D | PATENT ABSTRACTS OF JAPAN vol. 12, no. 097 (P-682)30 March 1988 & JP-A-62 229 526 ( AKAI ELECTRIC CO LTD ) 8 October 1987 * abstract * | 1,5-7,10 | G11B5/72 |
| A | EP-A-0 183 427 (KABUSHIKI KAISHA TOSHIBA) 4 June 1986 * claims 1,3,5 * | 1,5-8,10 | |
| A | EP-A-0 363 924 (MATSUSHITA ELECTRIC) 18 April 1990 * page 2, line 51 - page 3, line 15 * * claim 1 * | 1,9 | |

TECHNICAL FIELDS
SEARCHED (Int. Cl.5)

G11B

The present search report has been drawn up for all claims

| Place of search | Date of completion of the search | Examiner |
|---|---|---|
| THE HAGUE | 03 DECEMBER 1992 | KLOCKE S. |